# EUROPÄISCHE PATENTSCHRIFT

(11) **EP 3 757 331 B1**
(45) Veröffentlichungstag und Bekanntmachung des Hinweises auf die Patenterteilung: **19.07.2023**
(21) Anmeldenummer: 20161113.4
(22) Anmeldetag: 05.03.2020
(51) Int. Cl.: E05F 15/41, E05F 15/603

(54) **ANTRIEB FÜR EINEN FLÜGEL EINER TÜR ODER EINES FENSTERS**
DRIVE FOR A LEAF OF A DOOR OR WINDOW
ENTRAÎNEMENT POUR UN BATTANT D'UNE PORTE OU D'UNE FENÊTRE

(30) Priorität: 24.06.2019 DE 102019209085
(43) Veröffentlichungstag der Anmeldung: 30.12.2020
(73) Patentinhaber: GEZE GmbH, 71229 Leonberg (DE)
(72) Erfinder: Strobel, Fabian, 71229 Leonberg (DE); Fees, Heiner, 74321 Bietigheim-Bissingen (DE); Hohl, Ulrich, 74080 Heilbronn (DE)

(56) Entgegenhaltungen:
- DE-A1-102005 012 938
- DE-A1-102007 061 731
- DE-A1-102009 046 080
- DE-A1-102010 003 657
- DE-B3-102010 013 597
- DE-U1-202007 002 470

## Beschreibung

Die Erfindung betrifft einen Antrieb für einen Flügel einer Tür oder eines Fensters, mit einer Antriebswelle, einem die Antriebswelle antreibenden Motor sowie einer Abtriebswelle zur Übertragung eines Drehmoments von dem Motor an den Flügel.

Ein Fensterantrieb sollte vorzugsweise das Gewicht eines Fensterflügels halten, auch wenn der Antrieb nicht bestromt wird. Es gilt sicherzustellen, dass sich das Getriebe von äußeren Einflüssen nicht bewegen lässt, sondern nur durch den Motor bewegt werden kann. Dafür wird das Getriebe üblicherweise selbsthemmend ausgelegt. Die Selbsthemmung wirkt sich allerdings negativ auf den Wirkungsgrad des Antriebs aus, was zu Leistungsverlust führt.

Ein Antrieb gemäß dem Oberbegriff des Anspruchs 1 ist aus DE 10 2005 012938 A1, DE 10 2010 013597 B3 und DE 20 2007 002470 U1 bekannt. Weitere Antriebe werden in DE 10 2009 046080 A1, DE 10 2010 003657 A1 und DE 10 2007 061731 A1 beschrieben.

Es ist eine Aufgabe der Erfindung, bei einem Antrieb der eingangs genannten Art eine Hemmung der Bewegung der Komponenten, insbesondere im stromlosen Zustand, mit verbessertem Wirkungsgrad des Antriebs bzw. geringeren Verlusten in der motorischen Leistungsübertragung bei zugleich kompakter Bauweise zu ermöglichen.

Diese Aufgabe wird durch einen Antrieb nach Anspruch 1 gelöst, und insbesondere durch eine Anordnung zum gerichteten Hemmen der Drehmomentübertragung zwischen Antriebs- und Abtriebswelle, wobei die Anordnung umfasst: wenigstens ein Übertragungselement für das Drehmoment, eine Feder, die mit dem Übertragungselement zu einer gemeinsamen Drehung gekoppelt ist, und eine statische Federaufnahme, durch die die Feder unter Reibung drehbar gelagert ist, wobei die Feder wenigstens einen ersten Mitnehmerabschnitt zum Zusammenwirken mit dem Übertragungselement aufweist, und wobei die Feder derart angeordnet ist, dass eine Drehmomentübertragung in einer ersten Drehrichtung vom Übertragungselement auf den ersten Mitnehmerabschnitt die Reibung zwischen Feder und Federaufnahme verringert, sodass eine Drehung des Übertragungselements zusammen mit der Feder freigegeben wird, und/oder dass eine Drehmomentübertragung in einer zweiten, insbesondere der ersten entgegengesetzten, Drehrichtung vom Übertragungselement auf den ersten Mitnehmerabschnitt die Reibung zwischen Feder und Federaufnahme erhöht, sodass eine Drehung des Übertragungselements zusammen mit der Feder gehemmt wird, wobei die Anordnung zwei Übertragungselemente aufweist, nämlich ein Eingangselement, welches der Antriebswelle zugeordnet ist und ein Ausgangselement, welches der Abtriebswelle zugeordnet ist, wobei das Eingangselement und das Ausgangselement axial überlappende Halbwellenabschnitte umfassen und wobei ein Drehführungselement für das Eingangselement und das Ausgangselement vorgesehen ist, insbesondere wobei das Drehführungselement konzentrisch und/oder axial überlappend zu der Federaufnahme angeordnet ist. Erfindungsgemäß weist das Eingangselement und das Ausgangselement im Bereich der Halbwellenabschnitte jeweils einen zum Drehführungselement korrespondierenden Führungsbereich auf, der in gleitender Anlage zu dem Drehführungselement angeordnet ist.

Durch die Erfindung kann ein besserer Wirkungsgrad für den Antrieb erreicht werden. Die Selbsthemmung des Antriebs wird durch die Feder sichergestellt. Sie verhindert eine Bewegung des Motors und eines gegebenenfalls zwischengeschalteten Getriebes, wenn am ersten Mitnehmerabschnitt ein Drehmoment in der zweiten Drehrichtung anliegt. Wenn hingegen ein Drehmoment in der ersten Drehrichtung anliegt, kann eine reibungsarme Drehung zwischen Feder und Federaufnahme und somit eine reibungsarme Drehmomentübertragung über das Übertragungselement, insbesondere von der Antriebswelle zur Abtriebswelle, stattfinden. Dadurch ist es nicht mehr notwendig, ein zwischengeschaltetes Getriebe selbsthemmend auszulegen, was einen nachteiligen Wirkungsgrad und Leistungsverlust mit sich brächte.

Insbesondere kann die Drehmomentübertragung in der zweiten Drehrichtung die Reibung über eine Hemmschwelle erhöhen, oberhalb derer eine Drehung der Feder gehemmt oder blockiert ist. Zur Freigabe der Drehung kann die Reibung insbesondere auf einen Betrag unterhalb der Hemmschwelle verringert werden. Die Hemmung der Feder kann generell eine Blockade einer Drehung der Feder bedeuten, wobei insbesondere die Freigabe der Drehung der Feder einer Aufhebung der Blockade entspricht.

Bei der Feder kann es sich insbesondere um eine Schlingfeder handeln, welche den Kraftfluss, insbesondere in einem Getriebe, nur in eine Richtung zulässt, wobei sich dies insbesondere nicht auf die Drehrichtung, sondern auf die funktionale Flussrichtung des Drehmoments bezieht, also z.B. von Antriebswelle zu Abtriebswelle oder umgekehrt. Sinn und Zweck des Systems ist es insbesondere, die Kraft, welche vom Motor durch das Getriebe geleitet wird, weiterzuleiten und die Kraft, die vom Abtriebsritzel in Richtung Motor geleitet wird, zu sperren.

insbesondere wird die Reibung verringert, wenn von der Antriebswelle ein Drehmoment am Übertragungselement anliegt, welches größer als ein von der Abtriebswelle anliegendes Drehmoment ist. Insbesondere wird die Reibung erhöht, wenn von der Abtriebswelle ein Drehmoment am Übertragungselement anliegt, welches größer als ein von der Antriebswelle anliegendes Drehmoment ist. Anders ausgedrückt kann eine Übertragung eines Drehmoments von der Antriebswelle zur Abtriebswelle mit einer Verringerung der Reibung und/oder eine Übertragung eines Drehmoments von der Abtriebswelle zur Antriebswelle mit einer erhöhten Reibung korrespondieren und die Drehmomentübertragung insbesondere durch die Reibungserhöhung verhindert werden. Eine Drehmomentübertragung wird somit nur vom Motor zum Flügel hin aber nicht umgekehrt zugelassen. Die Anordnung ist folglich in Bezug auf die Drehmoment- bzw. Leistungsübertragung in einer Richtung selbsthemmend.

Grundsätzlich kann zwischen Feder und Federaufnahme auch ein Zwischenelement angeordnet sein. Insoweit also erfindungsgemäß die Reibung veränderlich ist, muss dies nicht notwendiger Weise die Reibung unmittelbar zwischen Feder und Federaufnahme betreffen. Vielmehr werden Feder und Federaufnahme insbesondere zumindest mittelbar gegeneinander beaufschlagt, wobei durch Veränderung der Beaufschlagung eine Reibung zumindest mittelbar zwischen ihnen verändert wird. Insbesondere ist die Federaufnahme relativ zu einem Gehäuse des Antriebs festgelegt.

Als Feder ist allgemein ein federelastisches Element bzw. Federelement zu betrachten. Die Feder muss nicht notwendigerweise metallisch sein. Die Feder kann beispielsweise durch einen, insbesondere gewickelten, Federdraht gebildet sein. Ein Federdraht kann beispielsweise als Rund- oder Vierkantmaterial gebildet sein. Die Feder kann aber beispielsweise alternativ auch ein federndes Blech umfassen.

Das Übertragungselement kann beispielsweise ein Teil eines Getriebeelements oder auch der Antriebswelle und/oder der Abtriebswelle sein, insbesondere einteilig hiermit verbunden sein. So kann das Übertragungselement beispielsweise mit einem Zahnrad zur Drehmomentübertragung verbunden sein, insbesondere einteilig mit diesem ausgebildet sein.

Insbesondere kann die Verringerung und/oder die Erhöhung der Reibung durch eine Verformung, insbesondere Vergrößerung und/oder Verkleinerung des Außen- und/oder Innenumfangs, der Feder bewirkt werden. Dabei kann die Verformung der Feder klein sein, beispielsweise weniger als 1 mm in Bezug auf den Durchmesser der Feder. Die Verformung muss nämlich nur so groß sein, dass die Reibung mit der Federaufnahme erhöht bzw. verringert wird. Die Verformung kann sich somit insbesondere lediglich in der Größenordnung der Rautiefe der Reibpartner abspielen.

Gemäß einer vorteilhaften Ausführungsform kann zwischen dem Übertragungselement und dem Mitnehmerabschnitt ein Drehspiel vorgesehen sein. Hierdurch können Reibungserhöhung und Reibungsverringerung besonders zuverlässig sichergestellt werden.

Die Feder kann beispielsweise in der Federaufnahme angeordnet und/oder gelagert sein. Dabei wird insbesondere durch Drehmomentübertragung an den Mitnehmerabschnitt eine Reibung zwischen Außenumfang der Feder und Innenfläche der Federaufnahme verändert. Die Federaufnahme kann beispielsweise einen kreiszylindrischen Hohlraum zur Aufnahme der Feder aufweisen.

Alternativ kann die Federaufnahme beispielweise innerhalb der Feder angeordnet sein und/oder als Zapfen ausgebildet sein. Dabei kann die Feder beispielsweise auf die Federaufnahme aufgesteckt angeordnet sein.

Die Feder kann vorteilhaft als Schraubenfeder ausgebildet sein. Eine solche bildet eine große Umfangsfläche und damit eine große Reibfläche mit der Federaufnahme aus, sodass eine hohe Reibung zur Bewegungshemmung realisierbar ist.

Bevorzugt kann der Mitnehmerabschnitt an einem Ende der Feder angeordnet sein, insbesondere an einem Ende eines Federdrahtes der Feder. Falls zwei Mitnehmer vorhanden sind, ist es vorteilhaft, wenn diese an gegenüberliegenden Enden der Feder angeordnet sind. Hierdurch lässt sich eine vorteilhafte Drehmomenteinleitung realisieren. Generell kann der Mitnehmer beispielsweise als nach innen oder außen gerichteter Vorsprung an der Feder ausgebildet sein.

Bei einem weiteren Ausführungsbeispiel ist der Mitnehmerabschnitt als umgebogener Abschnitt, insbesondere eines Federdrahtes, der Feder ausgebildet. Ein solcher ist einfach herstellbar und bewirkt eine unmittelbare Einleitung des Drehmoments in die Feder. Generell können die hier beschriebenen Ausführungsformen des Mitnehmers sowohl für den ersten als auch für einen weiteren Mitnehmer, wie er unten als zweiter Mitnehmer beschrieben ist, zutreffen.

Gemäß einer Weiterbildung ist vorgesehen, dass die Feder wenigstens einen zweiten Mitnehmerabschnitt aufweist, insbesondere wobei eine Drehmomentübertragung in der zweiten Drehrichtung vom Übertragungselement auf den zweiten Mitnehmerabschnitt die Reibung zwischen Feder und Federaufnahme verringert, sodass eine Drehung des Übertragungselements zusammen mit der Feder freigegeben wird, und/oder wobei eine Drehmomentübertragung in der ersten Drehrichtung vom Übertragungselement auf den zweiten Mitnehmerabschnitt die Reibung zwischen Feder und Federaufnahme erhöht, sodass eine Drehung des Übertragungselements zusammen mit der Feder gehemmt wird. Die Mitnehmerabschnitte wirken folglich in entgegengesetzten Drehrichtungen. Die Mitnehmerabschnitte liegen sich bevorzugt in Umfangsrichtung gegenüber.

Die erfindungsgemäße Anordnung weist zwei Übertragungselemente auf, insbesondere ein Eingangselement, welches der Antriebswelle zugeordnet ist, und ein Ausgangselement, welches der Abtriebswelle zugeordnet ist. Insbesondere kann dabei eine Drehmomentübertragung vom Eingangselement auf den Mitnehmerabschnitt oder die Mitnehmerabschnitte eine Reibung zwischen Feder und Federaufnahme verringern und/oder eine Drehmomentübertragung vom Ausgangselement auf den Mitnehmerabschnitt oder die Mitnehmerabschnitte die Reibung zwischen Feder und Federaufnahme erhöhen. Hierdurch wird auf einfache Weise eine Drehmomentübertragung in beiden Drehrichtungen ermöglicht, die aber in Bezug auf eine Leistungsflussrichtung nur in eine Richtung, nämlich von der Antriebswelle zur Abtriebswelle zugelassen wird.

Gemäß einer weiteren Ausführungsform können Eingangselement und Ausgangselement um ein Drehspiel gegeneinander drehbar sein. Hierdurch wird die Steuerung der Reibung zuverlässiger und präziser.

Das Drehmoment, insbesondere von der Antriebswelle bzw. von dem Motor, wird bevorzugt vom Eingangs- zum Ausgangselement über den Mitnehmerabschnitt übertragen. Hierdurch wird auf einfache Weise sichergestellt, dass die Reibung während der Übertragung dauerhaft niedrig bleibt. Der Mitnehmerabschnitt ist also insbesondere bei Übertragung in Umfangsrichtung zwischen Eingangs- und Ausgangselement eingeklemmt.

Erfindungsgemäß umfassen das Eingangselement und das Ausgangselement axial überlappende Halbwellenabschnitte. Hierdurch kann eine vorteilhafte Bauraumausnutzung bei zuverlässiger Drehmomentübertragung realisiert werden. Insbesondere können die Halbwellenabschnitte axial überlappend mit Federaufnahme und/oder Feder angeordnet sein.

Des Weiteren ist ein Drehführungselement für das wenigstens eine Übertragungselement vorgesehen, wobei das Drehführungselement bevorzugt konzentrisch und/oder axial überlappend zu der Federaufnahme angeordnet sein kann. Hierdurch können Drehmomentübertragung und Einstellung der Reibung besonders zuverlässig erfolgen.

Das Übertragungselement weist einen zum Drehführungselement korrespondierenden Führungsbereich auf, der in gleitender Anlage zu dem Drehführungselement angeordnet ist.

Im Falle eines zwei oder mehrteiligen Übertragungselements kann ein Drehführungselement beispielsweise separat, insbesondere als Zapfen ausgebildet sein. Es ist auch möglich, dass das Drehführungselement einteilig mit dem Eingangselement oder dem Ausgangselement ausgebildet ist, beispielsweise als angeformter Zylinder.

Bei einem weiteren Beispiel ist die Feder in einem drehmomentfreien Zustand gegen die Federaufnahme vorgespannt. Hierdurch kann die Feder nicht nur zuverlässig in der Federaufnahme gehalten werden, sondern es wird auch eine gewisse voreingestellte Reibung realisiert.

Generell können Feder, Federaufnahme und Übertragungselement, insbesondere Eingangs- und Ausgangselement, und/oder Drehführungselement axial überlappend, insbesondere ineinander verschachtelt angeordnet sein. Dies erlaubt eine besonders kompakte Bauweise.

Die Feder kann grundsätzlich auch mit dem Übertragungselement, insbesondere mit dem Eingangs- oder dem Ausgangselement, fest verbunden sein. Auch eine einteilige Ausführung ist denkbar.

Nachdem hier ein Antrieb für einen Flügel einer Tür oder eines Fensters beschrieben wird, versteht es sich, dass die Erfindung auch auf ein System gerichtet ist, welches einen Antrieb der beschriebenen Art und einen Tür- oder Fensterflügel umfasst, der an die Abtriebswelle des Antriebs angeschlossen ist.

Die Erfindung wird nachfolgend lediglich beispielhaft anhand der schematischen Zeichnung erläutert.
- Fig. 1: zeigt einen erfindungsgemäßen Antrieb.
- Fig. 2: zeigt eine Feder, ein Eingangselement und ein Ausgangsele-ment eines erfindungsgemäßen Antriebs.
- Fig. 3: zeigt eine Schnittansicht einer erfindungsgemäßen Anord-nung zum gerichteten Hemmen der Drehmomentübertra-gung in einem Antrieb.

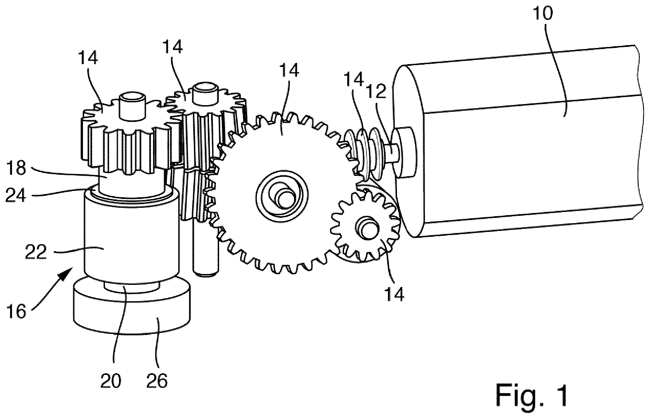

In Fig. 1 ist ein Antrieb für einen Flügel einer Tür oder eines Fensters mit seinen wesentlichen Leistungsübertragungskomponenten dargestellt. Der Antrieb umfasst einen Motor 10, der eine Antriebswelle 12 motorisch antreibt.

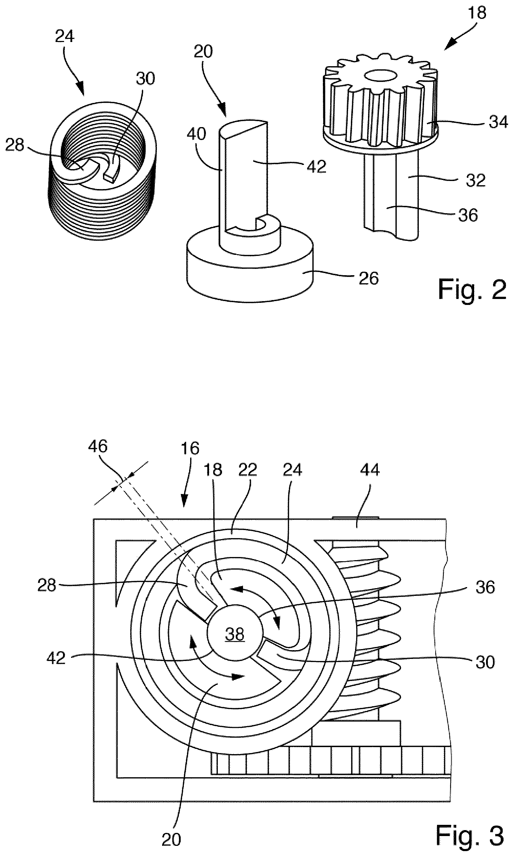

Der Antriebswelle 12 nachgeschaltet sind eine Mehrzahl an Getriebeelementen 14 zur Übertragung und Übersetzung des Drehmoments vorgesehen, die unter anderem mehrere Ritzel umfassen. Außerdem ist eine Anordnung 16 zum gerichteten Hemmen der Drehmomentübertragung vorgesehen, welche ein Eingangselement 18, ein Ausgangselement 20, eine Federaufnahme 22 und eine Feder 24 umfasst. Eine derartige Anordnung 16 wird unten mit Bezug auf die Fig. 2 und 3 noch näher erläutert. Das Ausgangselement 20 ist mit einem weiteren Ritzel 26 verbunden, welches ein Drehmoment von dem Motor 10 weiter zu einer nicht dargestellten Abtriebswelle überträgt.

In Fig. 2 sind eine Feder 24, ein Eingangselement 18 und ein Ausgangselement 20 separat gezeigt. Die Feder 24 ist als Schraubenfeder ausgebildet und umfasst zwei Mitnehmerabschnitte 28, 30. Die Mitnehmerabschnitte 28, 30 sind jeweils an einem Ende eines Federdrahtes angeordnet und durch Umbiegen desselben gebildet. Die Feder 24 ist hier und generell bevorzugt aus einem Vierkantmaterial gebildet, kann jedoch beispielsweise auch aus einem Rundmaterial gebildet sein.

Das Eingangselement 18 umfasst zur Übertragung eines Drehmoments an das Ausgangselement 20 in einem in Fig. 2 unteren Abschnitt eine Halbwelle 32. Die Halbwelle 32 ist mit einem Ritzel 34 einstückig verbunden, welches beispielsweise zur Übertragung eines Drehmoments von einem vorgeschalteten Getriebe, beispielsweise mit Getriebeelementen 14 gemäß Fig. 1, vorgesehen ist. Das Eingangselement 18 umfasst ferner einen Führungsbereich 36 zur Führung gegenüber einem anhand von Fig. 3 noch näher beschriebenen Drehführungselement 38.

Das Ausgangselement 20 umfasst eine zur Halbwelle 32 des Eingangselements 18 korrespondierende Halbwelle 40 und ebenfalls einen Führungsbereich 42 zur Führung gegenüber dem Drehführungselement 38. An dem Ausgangselement 20 ist wiederum ein Ritzel 26 zur Übertragung eines Drehmoments an eine nicht dargestellte Abtriebswelle angeordnet.

In Fig. 3 ist eine erfindungsgemäße Anordnung 16 zur gerichteten Hemmung einer Drehmomentübertragung in einem Antrieb für einen Flügel einer Tür oder eines Fensters gezeigt, wobei die Ansicht eine Schnittebene durch die Anordnung 16 senkrecht zu einer Rotationsachse der Komponenten zeigt.

Die Anordnung 16 umfasst eine Feder 24, die in einer Federaufnahme 22 drehbar aber mit einer gewissen Reibung gegenüber der Federaufnahme 22 gelagert ist. Die Feder 24 umfasst zwei Mitnehmerabschnitte 28 und 30, die an jeweils gegenüberliegenden Enden der Feder 24 als umgebogener Vorsprung ausgebildet sind. Die Federaufnahme 22 ist als Hülse ausgebildet, die in einem Gehäuse 44 des Antriebs fest angeordnet ist. Grundsätzlich könnte auch das Gehäuse 44 selbst eine Federaufnahme definieren.

Innerhalb der Feder sind ein Eingangselement 18 und ein Ausgangselement 20 mit jeweiligen korrespondierenden Halbwellenabschnitten angeordnet. Das Eingangselement 18 und das Ausgangselement 20 weisen jeweils einen Führungsbereich 36 bzw. 42 zur gleitenden Führung gegenüber einem Drehführungselement 38 auf, welches konzentrisch mit den Halbwellen, der Feder 24 und der Hülse 22 angeordnet ist.

Das Eingangselement 18 und das Ausgangselement 20 sind drehbar gelagert, unter anderem durch das Drehführungselement 38. Das Eingangselement 18 ist somit gegen das Ausgangselement 20 drehbar, so dass ein Drehmoment übertragen werden kann. Dabei ist jedoch eine Übertragung eines Drehmoments von dem Ausgangselement 20 zu dem Eingangselement 18 durch die Anordnung 16 gesperrt, deren Funktionsweise im Folgenden näher beschrieben wird.

Betrachtet wird zunächst ein erster Mitnehmer 28. Wenn sich das Eingangselement 18 in einer ersten Drehrichtung, in Fig. 3 gegen den Uhrzeigersinn, gegen den Mitnehmerabschnitt 28 bewegt und ein Drehmoment auf diesen ausübt, bewirkt dies eine leichte Durchmesserverkleinerung der Feder 24 und in der Folge eine Verringerung der Reibung zwischen der Feder 24 und der Federaufnahme 22. Denn das Eingangselement 18 zieht über den Mitnehmerabschnitt 28 den Federdraht der Feder 24 nach innen. Solange also ein Drehmoment in der ersten Drehrichtung, hier gegen den Uhrzeigersinn, anliegt, ist die Reibung gering und sowohl das Eingangselement 18 als auch die Feder 24 drehen sich in der Federaufnahme 22. Außerdem wird das Eingangselement 18 das Ausgangselement 20 mitnehmen, also in der gleichen Drehrichtung drehen und das Drehmoment übertragen. Dabei wird das Drehmoment vom Eingangselement 18 über den Mitnehmerabschnitt 28 an das Ausgangselement 20 übertragen.

Das Gegenteil passiert, wenn das Ausgangselement 20 ein Drehmoment auf den ersten Mitnehmerabschnitt 28 in einer zweiten, der ersten entgegengesetzten, in Fig. 3 mit dem Uhrzeigersinn gerichteten, Richtung überträgt. Denn hierdurch wird der Federdraht aufgebogen und die Feder wird in ihrem Umfang leicht vergrößert, so dass sich die Reibung zwischen der Feder 24 und der Federaufnahme 22 erhöht. Dies geschieht in selbsthemmender Weise, das heißt, die initial vorhandene Reibung zwischen der Feder 24 und der Federaufnahme 22 ist so groß, dass ein eingeleitetes Drehmoment die Feder 24 nicht dreht, sondern deren Durchmeser vergrößert. Hierdurch wird wiederum die Reibung vergrößert. Dies ist ein selbstverstärkender Effekt. Gleichwohl kann die Anordnung 16 dazu ausgelegt sein, ab einem maximalen Drehmoment dennoch eine Übertragung vom Ausgangselement 20 zum Eingangselement 18 zuzulassen, beispielsweise im Fall eines Schlages auf einen Flügel.

In Umfangsrichtung zwischen dem Eingangselement 18 und dem Ausgangselement 20 ist ein Drehspiel 46 vorgesehen. Dieses erlaubt eine ausreichende Verformung der Feder 24, um die genannten Durchmesserveränderungen zu bewirken.

In ähnlicher Weise wirkt der Mitnehmerabschnitt 30 mit dem Eingangselement 18 und dem Ausgangselement 20 zusammen, wobei dies jedoch in Bezug auf die Drehrichtungen umgekehrt stattfindet. So bewirkt eine Drehmomentübertragung vom Eingangselement 18 in der zweiten Drehrichtung, in Fig. 3 mit dem Uhrzeigersinn, auf den Mitnehmerabschnitt 30 eine Verkleinerung des Durchmessers der Feder 24 und somit eine Verringerung der Reibung zwischen der Feder 24 und der Federaufnahme 22. Hingegen bewirkt eine Drehmomentübertragung vom Ausgangselement 20 in der ersten Drehrichtung, hier entgegen dem Uhrzeigersinn, auf den Mitnehmerabschnitt 30 eine Vergrößerung des Durchmessers der Feder und somit eine Erhöhung der Reibung zwischen der Feder 24 und der Federaufnahme 22.

Eine Übertragung von Drehmoment vom Ausgangselement 20 auf das Eingangselement 18 ist also stets blockiert und zwar in beiden Drehrichtungen. Denn in beiden Drehrichtungen wirkt ein Mitnehmerabschnitt 28 bzw. 30 mit dem Ausgangselement 20 zusammen, um den Durchmesser der Feder zu vergrößern und die Reibung hin zu einer Blockade zu erhöhen. Wenn jedoch ein Drehmoment von dem Eingangselement 18, also von einer hieran angeschlossenen Antriebswelle eines Motors ausgeht und an das Ausgangselement 20 bzw. eine Abtriebswelle (nicht dargestellt) übertragen werden soll, blockiert die Anordnung 16 nicht, sondern die Reibung zwischen Feder 24 und Federaufnahme 22 ist klein und Eingangselement 18, Ausgangselement 20 und Feder 24 können sich frei in der Federaufnahme 22 drehen.

Auch zwischen Eingangselement 18 und Ausgangselement 20 ist im Bereich des Mitnehmerabschnitts 30 ein Drehspiel 46 vorgesehen. Nach Übertragung des Drehmoments vom Eingangselement 18 auf einen jeweiligen Mitnehmerabschnitt 28 oder 30 gelangt dieser in Anlage mit dem Ausgangselement 20. Das Drehmoment wird dann über den Mitnehmerabschnitt 28 bzw. 30 auf das Ausgangselement 20 übertragen. Der Mitnehmerabschnitt 28, 30 ist dann also zwischen Eingangselement 18 und Ausgangselement 20 eingeklemmt. Eine Umkehr der Drehrichtung des Motors 10 kann jedoch nach Überwindung des Drehspiels 46 den jeweils anderen Mitnehmerabschnitt 30 bzw. 28 zur Verringerung der Reibung betätigen und zur Übertragung des Drehmoments auf die Abtriebswelle den Mitnehmerabschnitt in Anlage mit dem Ausgangselement 20 bringen.

Es zeigt sich, dass mit einfachen Mitteln eine gerichtete Hemmung der Drehmomentübertragung in einem Antrieb für einen Flügel einer Tür oder eines Fensters ermöglicht wird. Dabei wirkt die Hemmung bzw. Blockade einer Drehmomentübertragung vom Flügel zum Motor insbesondere selbstverstärkend, also besonders zuverlässig. Hingegen ist die Reibung bei einer Drehmomentübertragung vom Motor zum Flügel bzw. zur Abtriebswelle gering. Der Wirkungsgrad des Antriebs ist somit gut und Leistungsverluste werden gering gehalten.

### Bezugszeichenliste

- 10: Motor
- 12: Antriebswelle
- 14: Getriebeelemente
- 16: Anordnung zum Hemmen der Drehmomentübertragung
- 18: Eingangselement
- 20: Ausgangselement
- 22: Federaufnahme
- 24: Feder
- 26: Ritzel
- 28: Mitnehmerabschnitt
- 30: Mitnehmerabschnitt
- 32: Halbwelle
- 34: Ritzel
- 36: Führungsbereich
- 38: Drehführungselement
- 40: Halbwelle
- 42: Führungsbereich
- 44: Gehäuse
- 46: Drehspiel

## Patentansprüche

1. Antrieb für einen Flügel einer Tür oder eines Fensters, mit einer Antriebswelle (12), einem die Antriebswelle (12) antreibenden Motor (10) sowie einer Abtriebswelle zur Übertragung eines Drehmoments von dem Motor (10) an den Flügel, und
einer Anordnung (16) zum gerichteten Hemmen der Drehmomentübertragung zwischen Antriebs- und Abtriebswelle, wobei die Anordnung (16) umfasst:
wenigstens ein Übertragungselement (18, 20) für das Drehmoment,
eine Feder (24), die mit dem Übertragungselement (18, 20) zu einer gemeinsamen Drehung gekoppelt ist, und
eine statische Federaufnahme (22), durch die die Feder (24) unter Reibung drehbar gelagert ist,
wobei die Feder (24) wenigstens einen ersten Mitnehmerabschnitt (28, 30) zum Zusammenwirken mit dem Übertragungselement (18, 20) aufweist, und wobei die Feder (24) derart angeordnet ist, dass eine Drehmomentübertragung in einer ersten Drehrichtung vom Übertragungselement (18, 20) auf den ersten Mitnehmerabschnitt (28, 30) die Reibung zwischen Feder (24) und Federaufnahme (22) verringert, sodass eine Drehung des Übertragungselements (18, 20) zusammen mit der Feder (24) freigegeben wird, und/oder dass eine Drehmomentübertragung in einer zweiten, insbesondere der ersten entgegengesetzten, Drehrichtung vom Übertragungselement (18, 20) auf den ersten Mitnehmerabschnitt (28, 30) die Reibung zwischen Feder (24) und Federaufnahme (22) erhöht, sodass eine Drehung des Übertragungselement (18, 20) zusammen mit der Feder (24) gehemmt wird, wobei die Anordnung (16) zwei Übertragungselemente aufweist, nämlich ein Eingangselement (18), welches der Antriebswelle (12) zugeordnet ist und ein Ausgangselement (20), welches der Abtriebswelle zugeordnet ist, wobei das Eingangselement (18) und das Ausgangselement (20) axial überlappende Halbwellenabschnitte (32, 40) umfassen und wobei ein Drehführungselement (38) für das Eingangselement (18) und das Ausgangselement (20) vorgesehen ist, insbesondere wobei das Drehführungselement (38) konzentrisch und/oder axial überlappend zu der Federaufnahme (22) angeordnet ist,
**dadurch gekennzeichnet, dass**
das Eingangselement (18) und das Ausgangselement (20) im Bereich der Halbwellenabschnitte (32, 40) jeweils einen zum Drehführungselement (38) korrespondierenden Führungsbereich (36, 42) aufweisen, der in gleitender Anlage zu dem Drehführungselement (38) angeordnet ist.

2. Antrieb nach Anspruch 1,
**dadurch gekennzeichnet,**
**dass** die Verringerung und/oder die Erhöhung der Reibung durch eine Verformung der Feder (24) bewirkt wird.

3. Antrieb nach Anspruch 1 oder 2,
**dadurch gekennzeichnet,**
**dass** zwischen Übertragungselement (18, 20) und Mitnehmerabschnitt (28, 30) ein Drehspiel (46) vorgesehen ist.

4. Antrieb nach einem der vorstehenden Ansprüche,
**dadurch gekennzeichnet,**
**dass** die Feder (24) in der Federaufnahme (22) angeordnet ist.

5. Antrieb nach einem der vorstehenden Ansprüche,
**dadurch gekennzeichnet,**
**dass** die Feder (24) als Schraubenfeder ausgebildet ist.

6. Antrieb nach einem der vorstehenden Ansprüche,
**dadurch gekennzeichnet,**
**dass** der Mitnehmerabschnitt (28, 30) an einem Ende der Feder (24) angeordnet ist.

7. Antrieb nach einem der vorstehenden Ansprüche,
**dadurch gekennzeichnet,**
**dass** der Mitnehmerabschnitt (28, 30) als umgebogener Abschnitt der Feder (24) ausgebildet ist.

8. Antrieb nach einem der vorstehenden Ansprüche,
**dadurch gekennzeichnet,**
**dass** die Feder (24) wenigstens einen zweiten Mitnehmerabschnitt (28, 30) aufweist, wobei eine Drehmomentübertragung in der zweiten Drehrichtung vom Übertragungselement (18, 20) auf den zweiten Mitnehmerabschnitt (28, 30) die Reibung zwischen Feder (24) und Federaufnahme (22) verringert, sodass eine Drehung des Übertragungselements (18, 20) zusammen mit der Feder (24) freigegeben wird, und/oder wobei eine Drehmomentübertragung in der ersten Drehrichtung vom Übertragungselement (18, 20) auf den zweiten Mitnehmerabschnitt (28, 30) die Reibung zwischen Feder (24) und Federaufnahme (22) erhöht, sodass eine Drehung des Übertragungselements (18, 20) zusammen mit der Feder (24) gehemmt wird.

9. Antrieb nach einem der vorstehenden Ansprüche,
**dadurch gekennzeichnet,**
**dass** Eingangselement (18) und Ausgangselement (20) um ein Drehspiel (46) gegeneinander drehbar sind.

10. Antrieb nach einem der vorstehenden Ansprüche,
**dadurch gekennzeichnet,**
**dass** das Drehmoment vom Eingangselement (18) zum Ausgangselement (20) über den Mitnehmerabschnitt (28, 30) übertragen wird.

11. Antrieb nach einem der vorstehenden Ansprüche,
**dadurch gekennzeichnet,**
**dass** die Feder (24) in einem drehmomentfreien Zustand gegen die Federaufnahme (22) vorgespannt ist.

12. Antrieb nach einem der vorstehenden Ansprüche,
**dadurch gekennzeichnet,**
**dass** die Feder (24), die Federaufnahme (22) und das Übertragungselement, insbesondere das Eingangselement (18) und/oder das Ausgangselement (20), und/oder das Drehführungselement (38) axial überlappend, insbesondere ineinander verschachtelt, angeordnet sind.

13. System umfassend einen Antrieb nach einem der vorstehenden Ansprüche und einen Flügel, der an die Abtriebswelle des Antriebs angeschlossen ist.

## Claims

1. Drive for a leaf of a door or window, having a drive shaft (12), a motor (10) driving the drive shaft (12), and an output shaft for transmitting a torque from the motor (10) to the leaf; and
an assembly (16) for inhibiting in a directed manner the transmission of torque between the drive shaft and the output shaft, wherein the assembly (16) comprises:
at least one transmission element (18, 20) for the torque; a spring (24) which for conjoint rotation is coupled to the transmission element (18, 20); and a static spring receptacle (22) by way of which the spring (24) is mounted so as to be rotatable under friction;
wherein the spring (24) has at least one first entrainment portion (28, 30) for interacting with the transmission element (18, 20); and wherein the spring (24) is disposed in such a manner that a transmission of torque in a first rotation direction from the transmission element (18, 20) to the first entrainment portion (28, 30) reduces the friction between the spring (24) and the spring receptacle (22) such that a rotation of the transmission element (18, 20) conjointly with the spring (24) is released, and/or that a transmission of torque in a second rotation direction, in particular counter to the first rotation direction, from the transmission element (18, 20) to the first entrainment portion (28, 30), increases the friction between the spring (24) and the spring receptacle (22) such that a rotation of the transmission element (18, 20) conjointly with the spring (24) is inhibited;
wherein the assembly (16) has two transmission elements, specifically an input element (18) which is assigned to the drive shaft (12), and an output element (20) which is assigned to the output shaft,
wherein the input element (18) and the output element (20) comprise axially overlapping half-shaft portions (32, 40) and wherein a rotational guide element (38) for the input element (18) and the output element (20) is provided, in particular wherein the rotational guide element (38) is disposed so as to be concentric with and/or to axially overlap the spring receptacle (22),
**characterized in that** the input element (18) and the output element (20) in the region of the half-shaft portions (32, 40) have in each case one guide region (36, 42) which corresponds to the rotational guide element (38) and is disposed so as to be in sliding contact with the rotational guide element (38).

2. Drive according to Claim 1,
**characterized in that**
the reduction and/or the increase in friction are/is caused by a deformation of the spring (24).

3. Drive according to Claim 1 or 2,
**characterized in that**
a rotational clearance (46) is provided between the transmission element (18, 20) and the entrainment portion (28, 30).

4. Drive according to one of the preceding claims,
**characterized in that**
the spring (24) is disposed in the spring receptacle (22) .

5. Drive according to one of the preceding claims,
**characterized in that**
the spring (24) is configured as a coil spring.

6. Drive according to one of the preceding claims,
**characterized in that**
the entrainment portion (28, 30) is disposed on an end of the spring (24).

7. Drive according to one of the preceding claims,
**characterized in that**
the entrainment portion (28, 30) is configured as a bent portion of the spring (24).

8. Drive according to one of the preceding claims,
**characterized in that**
the spring (24) has at least one second entrainment portion (28, 30), wherein a transmission of torque in the second rotation direction from the transmission element (18, 20) to the second entrainment portion (28, 30) reduces the friction between the spring (24) and the spring receptacle (22) such that a rotation of the transmission element (18, 20) conjointly with the spring (24) is released, and/or wherein a transmission of torque in the first rotation direction from the transmission element (18, 20) to the second entrainment portion (28, 30) increases the friction between the spring (24) and the spring receptacle (22) such that a rotation of the transmission element (18, 20) conjointly with the spring (24) is inhibited.

9. Drive according to one of the preceding claims,
**characterized in that**
the input element (18) and the output element (20) are mutually rotatable by a rotational clearance (46) .

10. Drive according to one of the preceding claims,
**characterized in that**
the torque from the input element (18) is transmitted to the output element (20) by way of the entrainment portion (28, 30).

11. Drive according to one of the preceding claims,
**characterized in that**
the spring (24) in a torque-free state is pretensioned in relation to the spring receptacle (22) .

12. Drive according to one of the preceding claims,
**characterized in that**
the spring (24), the spring receptacle (22) and the transmission element, in particular the input element (18) and/or the output element (20), and/or the rotational guide element (38) are disposed so as to axially overlap, in particular so as to be nested in one another.

13. System comprising a drive according to one of the preceding claims, and a leaf which is connected to the output shaft of the drive.

## Revendications

1. Entraînement pour un battant d'une porte ou d'une fenêtre, comprenant
un arbre d'entraînement (12), un moteur (10) entraînant l'arbre d'entraînement (12) ainsi qu'un arbre de sortie pour transmettre un couple du moteur (10) au battant, et un agencement (16) pour inhiber de manière directionnelle la transmission du couple entre l'arbre d'entrée et l'arbre de sortie, l'agencement (16) comprenant :
au moins un élément de transmission (18, 20) pour le couple,
un ressort (24) qui est couplé à l'élément de transmission (18, 20) pour une rotation commune, et
un support statique (22) de ressort par lequel le ressort (24) est monté de manière rotative avec frottement,
le ressort (24) présentant au moins une première section d'entraînement (28, 30) destinée à coopérer avec l'élément de transmission (18, 20), et le ressort (24) étant agencé de telle sorte qu'une transmission de couple dans un premier sens de rotation de l'élément de transmission (18, 20) à la première section d'entraînement (28, 30) réduit le frottement entre le ressort (24) et le support (22) de ressort, de sorte qu'une rotation de l'élément de transmission (18, 20) avec le ressort (24) soit libérée, et/ou qu'une transmission de couple dans un deuxième sens de rotation, en particulier opposé au premier, de l'élément de transmission (18, 20) à la première section d'entraînement (28, 30) augmente le frottement entre le ressort (24) et le support (22) de ressort, de sorte qu'une rotation de l'élément de transmission (18, 20) avec le ressort (24) soit bloquée, l'agencement (16) présentant deux éléments de transmission, à savoir un élément d'entrée (18), qui est associé à l'arbre d'entraînement (12), et un élément de sortie (20), qui est associé à l'arbre de sortie, l'élément d'entrée (18) et l'élément de sortie (20) comprenant des parties en demi-arbre (32, 40) se chevauchant axialement et un élément (38) de guidage en rotation étant prévu pour l'élément d'entrée (18) et l'élément de sortie (20), en particulier l'élément (38) de guidage en rotation étant agencé de manière concentrique par rapport au support (22) de ressort et/ou en chevauchement axial avec celui-ci,
**caractérisé**
**en ce que** l'élément d'entrée (18) et l'élément de sortie (20) présentent chacun, dans la zone des parties en demi-arbres (32, 40), une zone de guidage (36, 42) correspondant à l'élément (38) de guidage en rotation, qui est agencée en contact glissant sur l'élément (38) de guidage en rotation.

2. Entraînement selon la revendication 1,
**caractérisé**
**en ce que** la réduction et/ou l'augmentation du frottement est provoquée par une déformation du ressort (24).

3. Entraînement selon la revendication 1 ou la revendication 2,
**caractérisé**
**en ce qu'**un jeu de rotation (46) est prévu entre l'élément de transmission (18, 20) et la section d'entraînement (28, 30).

4. Entraînement selon l'une des revendications précédentes,
**caractérisé**
**en ce que** le ressort (24) est agencé dans le support (22) de ressort.

5. Entraînement selon l'une des revendications précédentes,
**caractérisé**
**en ce que** le ressort (24) est conçu sous la forme d'un ressort hélicoïdal.

6. Entraînement selon l'une des revendications précédentes,
**caractérisé**
**en ce que** la section d'entraînement (28, 30) est agencée à une extrémité du ressort (24).

7. Entraînement selon l'une des revendications précédentes,
**caractérisé**
**en ce que** la section d'entraînement (28, 30) est conçue sous la forme d'une section repliée du ressort (24).

8. Entraînement selon l'une des revendications précédentes,
**caractérisé**
**en ce que** le ressort (24) présente au moins une deuxième section d'entraînement (28, 30), une transmission de couple dans le deuxième sens de rotation de l'élément de transmission (18, 20) à la deuxième section d'entraînement (28, 30) réduisant le frottement entre le ressort (24) et le support (22) de ressort, de sorte qu'une rotation de l'élément de transmission (18, 20) avec le ressort (24) soit libérée, et/ou une transmission de couple dans le premier sens de rotation de l'élément de transmission (18, 20) à la deuxième section d'entraînement (28, 30) augmente le frottement entre le ressort (24) et le support (22) de ressort, de sorte qu'une rotation de l'élément de transmission (18, 20) avec le ressort (24) soit bloquée.

9. Entraînement selon l'une des revendications précédentes,
**caractérisé**
**en ce que** l'élément d'entrée (18) et l'élément de sortie (20) sont aptes à tourner l'un par rapport à l'autre sur un jeu de rotation (46).

10. Entraînement selon l'une des revendications précédentes,
**caractérisé**
**en ce que** le couple est transmis de l'élément d'entrée (18) à l'élément de sortie (20) par l'intermédiaire de la section d'entraînement (28, 30).

11. Entraînement selon l'une des revendications précédentes,
**caractérisé**
**en ce que** le ressort (24) est précontraint contre le support (22) de ressort dans un état d'absence de couple.

12. Entraînement selon l'une des revendications précédentes,
**caractérisé**
**en ce que** le ressort (24), le support (22) de ressort et l'élément de transmission, en particulier l'élément d'entrée (18) et/ou l'élément de sortie (20), et/ou l'élément (38) de guidage en rotation, sont agencés en chevauchement axial, en particulier imbriqués les uns dans les autres.

13. Système comprenant un entraînement selon l'une des revendications précédentes et un battant qui est relié à l'arbre de sortie de l'entraînement.
